# EUROPÄISCHE PATENTSCHRIFT

(11) **EP 2 295 236 B1**
(45) Veröffentlichungstag und Bekanntmachung des Hinweises auf die Patenterteilung: **22.01.2014**
(21) Anmeldenummer: 10168493.4
(22) Anmeldetag: 06.07.2010
(51) Int. Cl.: B32B 7/04, B32B 27/34, B60K 37/00

(54) **Vergilbungsfreie Folie**
Discoloration-free film
Feuille sans jaunissement

(30) Priorität: 11.08.2009 DE 102009026362
(43) Veröffentlichungstag der Anmeldung: 16.03.2011
(73) Patentinhaber: Benecke-Kaliko AG, 30419 Hannover (DE)
(72) Erfinder: Bühring, Jürgen, Dr., 30900, Wedemark (DE); Hülsewede, Volker, Dr., 73114, Schlat (DE); Eisengräber-Papst, Axel, Dr., 73614, Schorndorf (DE)
(74) Vertreter: Finger, Karsten

(56) Entgegenhaltungen:
- EP-A2- 0 266 107
- EP-A2- 0 373 515
- EP-A2- 0 396 917
- DE-A1- 3 417 729
- DE-A1- 3 636 876

## Beschreibung

Die Erfindung betrifft ein mehrschichtiges Folienlaminat, welches eine äußere oben liegende kompakte und ggf. mehrschichtige Dekorfolie aus thermoplastischem Kunststoffmaterial und eine darunter angeordnete Schaumschicht aufweist. Ferner betrifft die Erfindung ein Formteil zur Innenverkleidung von Fahrzeugen, enthaltend ein solches Folienlaminat.

Solche mehrschichtigen Konstruktionen mit einer äußeren Dekorfolie mit genarbter, gemusterter oder fein strukturierter Oberfläche, sind als Verkleidungen für die verschiedensten Gegenstände weithin bekannt und werden z. B. verwendet für die Innenverkleidung in Fahrzeugen, hier oft als relativ weiche unterschäumte Folien mit angenehmer Haptik, etwa für die Verkleidung von Armaturenbrettern oder die Innenschalen von Türen etc. In entsprechender Anpassung von Festigkeit und Design werden solche Folienlaminate natürlich auch für andere hochwertig beschichtete Waren genutzt.

In aller Regel werden solche Folienlaminate zusammen mit einem Schaumsystem auf einer formstabilen Trägerstruktur aus hartem Kunststoff oder anderen Materialien aufgebracht, wobei die Schaumschichten eine weiche und angenehme Griffigkeit bzw. Haptik erzeugen. Da im Bereich des Automobilinterieurs ein starker Trend zur Verbesserung der Qualitätsanmutung zu beobachten ist, sind solche "fühlbaren" Eigenschaften in zunehmendem Maße als Qualitätsmerkmal für Hersteller und Käufer entscheidend.

Für die Herstellung solcher mehrschichtiger Folien, auch Folienlaminate genannte, werden eine Vielzahl von unterschiedlichen Verarbeitungsverfahren angewendet. Typische Folien für den Automobilinnenraum werden z. B. zur Herstellung von Bauteilen thermisch verformt. Da die dazu notwendigen Verstreckungsgrade die Verwendung von vor dem Verstreckvorgang mit der Folie verbundenen Schaumschichten, so genannten Schaumsystemen, aufgrund zu niedriger Bruchdehnung des Schaumsystems verbieten, werden die kompakten Folienmaterialien der oberen Dekorfolie zuerst thermisch verformt und anschließend mit zumeist Polyurethan-Schaumsystemen hinterschäumt.

Auch sind so genannte Slush-Verfahren bekannt, bei denen mehrschichtige Folien durch Sintern / Rotationssintern hergestellt werden.

Bei der Alterung solcher Bauteile tritt jedoch oft eine Vergilbung der Oberflächen auf. Diese Vergilbung wird insbesondere bei hellen Farbtönen als stark störend empfunden. Sie wird durch eine Migration von Bestandteilen des Schaums, insbesondere des Polyurethanschaums (PUR-Schaum), und/oder deren Abbauprodukte in oder durch die Oberfolie verursacht.

Für die Erfindung bestand also die Aufgabe, ein mehrschichtiges Folienlaminat vorzuschlagen, welches mit den bewährten Verfahren ohne Probleme hergestellt werden kann und nach der Herstellung keine Neigung zur Vergilbung zeigt, wobei die die Vergilbung verursachende Migration unterbunden wird und die endgültigen Eigenschaften der Folie hinsichtlich Verarbeitung beim Kunden (Thermoformieren, Hinterschäumen) sowie die die Einsatzmöglichkeiten im Automobil unverändert lässt.

Gelöst wird diese Aufgabe durch die Merkmale des Hauptanspruchs. Weitere vorteilhafte Ausbildungen sind in den Unteransprüchen offenbart.

Dabei weist das Folienlaminat eine als Folie ausgebildete Zwischenschicht auf, die eine Migration und/oder Diffusion von Schaumbestandteilen oder deren Abbauprodukten in die äußern Bereiche der Dekorfolie und insbesondere auch in den außen aufgetragenen Lack verhindert. Im Gegensatz zur bisher bekannten Aufbringung von relativ spröden Lacken auf der eingeschäumten Seite der Dekorfolie, mit dem es nicht gelungen ist, die Migration der vergilbenden Substanzen zu verhindern, ist die erfindungsgemäß aufgebrachte Folie in der Lage, nicht nur den Tiefziehprozess der mit ihr verbundenen Dekorfolie problemlos zu überstehen, sondern verhindert auch überraschenderweise die Migration oder Diffusion von Substanzen, welche die obere Dekorfolie oder den dort aufgetragenen äußeren Lack vergilben könnten. Dies zeigt sich deutlich nach dem Hinterschäumen der Dekorfolie mit PUR-Schaum und einem anschließenden Alterungstest durch ultraviolette Strahlung und Wärmebelastung. Bei Tiefziehfolien muß beim Hinterschäumen natürlich der gesamte Prozess so ausgebildet und angepasst werden, dass die Schrumpfungen der Folien berücksichtigt werden.

Üblicherweise konnte bisher, d.h. im Stand der Technik eine störende Vergilbung des äußeren Lacks oder der äußeren Dekorfolie bei der Alterung eines gattungsgemäßen Bauteils nur durch einen Wechsel des Schaums verhindert werden. Damit muss aber ein bereits qualifiziertes, d.h. "freigegebenes" Bauteil nochmal komplett überprüft und erneut qualifiziert werden. Findet der Hinterschäumprozess beim Verarbeiter dazu noch auf Anlagen statt, auf denen Bauteile für verschiedene Projekte produziert werden, müssen zur Vermeidung hoher Rüstaufwände auch die anderen Bauteile mit dem neuen Schaum neu qualifiziert werden. Die erfindungsgemäße Ausbildung des Folienlaminates, bei der lediglich eine Zwischenfolie eingebracht wird, vermeidet derartige Auswirkungen.

Die Dekorfolie besteht aus thermoplastischem Polyolefin. So zeigt ein erfindungsgemäß ausgebildetes und hinterschäumtes Labormuster auf der Basis einer TPO-Folie (Thermoplastisches Polyolefin) bei einem Alterungstest nach der DIN 75220 (Sonnensimulation) ein Verhalten, bei dem die Vergilbung auf dem Niveau einer nicht-hinterschäumten Folie liegt und somit einzig die Alterung des Polymers erkennbar wird. Als Dekorfolien können natürlich auch Folien aus Polyvinylchlorid ( PVC) und/oder Acrylnitril-Butadienstyrol (ABS) eingesetzt werden.

Als Folien für die Zwischenschicht werden solche Folien verwendet, die sich bei einer Temperatur von 120° C noch nicht im Schmelzbereich befinden, wie z. B. Folien aus aus Polyethylen-Vinyl-Alkohol (EVOH), aus Polyester oder aus Polyurethan, die auch mit speziellem Ruß angefärbt sein können. Auch hier können Barriereeigenschaften beobachtet werden, die die Vergilbung reduzieren.

Eine weitere vorteilhafte Ausbildung besteht darin, dass eine Polyamidfolie als Zwischenschicht vorgesehen ist. Auch damit lässt sich der Widerstand gegen Vergilbung weiter erhöhen.

Eine weitere vorteilhafte Ausbildung besteht darin, dass die als Folie ausgebildete Zwischenschicht zwischen der Schaumschicht und der oben liegenden Dekorfolie angeordnet ist. Das vereinfacht den Schichtaufbau bei der Herstellung der Dekorfolie.

Eine weitere vorteilhafte Ausbildung für besondere Anwendungsfälle besteht darin, dass die als Folie ausgebildete Zwischenschicht als eine Schicht einer mehrschichtig ausgebildeten Dekorfolie angeordnet ist, also quasi als eine Schicht innerhalb der gesamten Schichtdicke einer dann mehrschichtig ausgebildeten Dekorfolie vorgesehen ist. Eine solche Ausbildung ändert beispielsweise bei bestehenden Verfahren zur Hinterschäumung nichts an der bisherigen Materialkombination in der Verbindungsfläche zwischen Schaum und Dekorfolie.

Es können natürlich auch mehrere solcher Zwischen- oder Barriereschichten angeordnet werden, z.B. eine innerhalb der Dekorfolie und eine zwischen Schaum und Dekorfolie.

Eine weitere vorteilhafte Ausbildung besteht darin, dass die Zwischenschicht eine Dicke von 5 bis 100 µm aufweist, vorzugsweise 5 bis 40 und 5 bis 70 µm Damit erreicht man einen besonders guten Migrations- oder Diffusionswiderstand der Folie bei gleichzeitig guter Verarbeitbarkeit und Tiefziehfähigkeit im Verbund.

Als Polyamide für die Zwischenschicht können Folien auf der Basis von Polyamid 6 und Polyamid 6.6, auch in modifizierter Form, eingesetzt werden. Bevorzugt werden modifizierte amorphe Polyamide eingesetzt, die zu einem hohen Migrations- oder Diffusionswiderstand bei gleichzeitig guter Verarbeitbarkeit und Tiefziehfähigkeit führen. Zur Modifikation der Polyamide können z. B. aromatischen Disäuren wie Phthal-, Isophthal- und Terephthalsäure verwendet werden.

Besonders hohe Migrations- oder Diffusionswiderstände bei gleichzeitig sehr guter Verarbeitbarkeit und Tiefziehfähigkeit können erzielt werden, wenn für die Zwischenschicht eine Folie aus amorphen Polyamid 6.6, modifiziert mit Isophthalsäure zum Einsatz kommt.

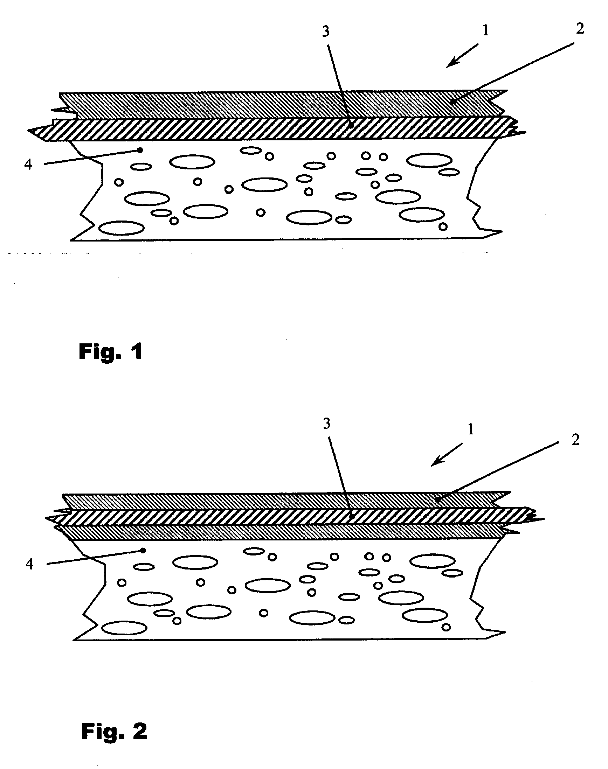

Anhand eines Ausführungsbeispieles soll die Erfindung näher erläutert werden. Die Figur 1 zeigt ein erfindungsgemäßes mehrschichtiges Folienlaminat 1, welches eine oben liegende kompakte Dekorfolie 2 aus thermoplastischem Polyolefin und eine darunter angeordnete Schaumschicht 4 aufweist. Zwischen der oberen kompakten Dekorfolie 2 und der Schaumschicht 4 ist erfindungsgemäß eine Zwischenschicht 3 aus einem amorphen Polyamid 6.6 angeordnet, wodurch ein ausgezeichneter Migrations- und Diffusionswiderstand bei gleichzeitig guter Verarbeitbarkeit und Tiefziehfähigkeit erreicht wird.

Die Figur 2 zeigt eine weitere Ausführungsform eines erfindungsgemäßen mehrschichtigen Folienlaminats 1, welches eine oben liegende kompakte Dekorfolie 2 aus thermoplastischem Polyolefin und eine darunter angeordnete Schaumschicht 4 aufweist. Innerhalb der oberen Dekorfolie 2 ist erfindungsgemäß eine Zwischenschicht 3 aus einem amorphen Polyamid 6.6 angeordnet. Die als Folie ausgebildete Zwischenschicht (3) ist damit als eine Schicht einer mehrschichtig ausgebildeten Dekorfolie (2) angeordnet.

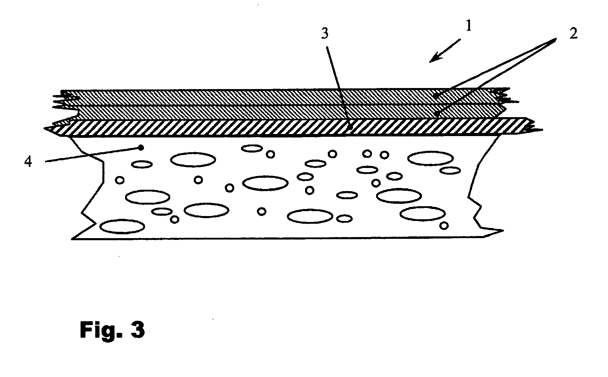

Die Figur 3 zeigt eine weitere Ausführungsform eines erfindungsgemäßen mehrschichtigen Folienlaminat 1, welches eine oben liegende kompakte Dekorfolie 2 aus thermoplastischem Polyolefin und eine darunter angeordnete Schaumschicht 4 aufweist. Die obere Dekorfolie 2 ist dabei mehrschichtig ausgebildet. Zwischen der oberen mehrschichtigen Dekorfolie 2 und der Schaumschicht 4 ist erfindungsgemäß eine Zwischenschicht 3 aus einem amorphen Polyamid 6.6 angeordnet.

### Bezugszeichenliste

### (Teil der Beschreibung)

- 1: Folienlaminat
- 2: Dekorfolie
- 3: Polyamidfolie als Zwischenschicht
- 4: Schaumlage

## Patentansprüche

1. Mehrschichtiges Folienlaminat (1), welches eine äußere oben liegende und ggf. mehrschichtig ausgebildete Dekorfolie (2) aus thermoplastischem Polyolefin und eine darunter angeordnete Schaumschicht (4) aufweist, **dadurch gekennzeichnet, dass** das Folienlaminat eine als Folie ausgebildete Zwischenschicht (3) aufweist, die eine Migration von Schaumbestandteilen oder deren Abbauprodukten in die äußern Bereiche der Dekorfolie verhindert, wobei die Zwischenschicht (3) aus einem Polymer besteht, dessen Schmelzbereich nicht unterhalb von 120° C beginnt.

2. Mehrschichtiges Folienlaminat nach Anspruch 1, bei dem die als Folie ausgebildete Zwischenschicht (3) zwischen der Schaumschicht (4) und der oben liegenden Dekorfolie (2) angeordnet ist.

3. Mehrschichtiges Folienlaminat nach Anspruch 1 oder 2, bei dem die als Folie ausgebildete Zwischenschicht (3) als eine Schicht einer mehrschichtig ausgebildeten Dekorfolie (2) angeordnet ist

4. Folienlaminat nach einem der Ansprüche 1 bis 3, bei dem die Zwischenschicht (3) eine Dicke von 5 bis 100 µm aufweist, vorzugsweise 5 bis 40 µm.

5. Folienlaminat nach einem der Ansprüche 1 bis 4, bei dem eine Polyamidfolie als Zwischenschicht (3) vorgesehen ist.

6. Folienlaminat nach Anspruch 5, bei dem die Zwischenschicht (3) aus einem amorphen Polyamid besteht.

7. Folienlaminat nach Anspruch 6, bei dem die Zwischenschicht (3) aus einem mit Isophthalsäure modifizierten, amorphen Polyamid besteht.

8. Formteil zur Innenverkleidung von Fahrzeugen, enthaltend ein Folienlaminat nach einem der Ansprüche 1 bis 7.

## Claims

1. Multilayer foil laminate (1) which has an exterior upper and optionally multilayer decorative foil (2) made of thermoplastic polyolefin, and, arranged under the said foil, a foam layer (4), **characterized in that** the foil laminate has an intermediate layer (3) which takes the form of a foil and which prevents migration of foam constituents or degradation products of these into the exterior regions of the decorative foil, where the intermediate layer (3) is composed of a polymer of which the melting range does not begin below 120°C.

2. Multilayer foil laminate according to Claim 1, where the intermediate layer (3) which takes the form of a foil is arranged between the foam layer (4) and the upper decorative foil (2).

3. Multilayer foil laminate according to Claim 1 or 2, where the intermediate layer (3) which takes the form of a foil is arranged as a layer of a multilayer decorative foil (2).

4. Foil laminate according to any of Claims 1 to 3, where the thickness of the intermediate layer (3) is from 5 to 100 µm, preferably from 5 to 40 µm.

5. Foil laminate according to any of Claims 1 to 4, where there is a polyamide foil provided as intermediate layer (3).

6. Foil laminate according to Claim 5, where the intermediate layer (3) is composed of an amorphous polyamide.

7. Foil laminate according to claim 6, where the intermediate layer (3) is composed of an isophthalic-acid-modified, amorphous polyamide.

8. Moulding for the interior cladding of vehicles, comprising a foil laminate according to any of Claims 1 to 7.

## Revendications

1. Stratifié pelliculaire multicouche (1), qui comporte un film de décor (2) externe se trouvant en haut et éventuellement à structure multicouche, à base de polyoléfine thermoplastique, et une couche de mousse (4) disposée au-dessous de celui-ci, **caractérisé en ce que** le stratifié pelliculaire comporte une couche intermédiaire (3) en forme de film, qui empêche une migration de composants de mousse ou de leurs produits de dégradation dans les zones externes du film de décor, la couche intermédiaire (3) étant constituée d'un polymère dont le domaine de fusion ne commence pas au-dessous de 120 °C.

2. Stratifié pelliculaire multicouche selon la revendication 1, dans lequel la couche intermédiaire (3) en forme de film est disposée entre la couche de mousse (4) et la feuille de décor (2) se trouvant au-dessus.

3. Stratifié pelliculaire multicouche selon la revendication 1 ou 2, dans lequel la couche intermédiaire (3) en forme de film est disposée sous forme d'une couche d'un film de décor (2) à structure multicouche.

4. Stratifié pelliculaire selon l'une quelconque des revendications 1 à 3, dans lequel la couche intermédiaire (3) présente une épaisseur de 5 à 100 µm, de préférence de 5 à 40 µm.

5. Stratifié pelliculaire selon l'une quelconque des revendications 1 à 4, dans lequel une feuille de polyamide est prévue en tant que couche intermédiaire (3).

6. Stratifié pelliculaire selon la revendication 5, dans lequel la couche intermédiaire (3) est constituée d'un polyamide amorphe.

7. Stratifié pelliculaire selon la revendication 6, dans lequel la couche intermédiaire (3) est constituée d'un polyamide amorphe modifié avec de l'acide isophtalique.

8. Pièce moulée destinée à l'habillage intérieur de véhicules, contenant un stratifié pelliculaire selon l'une quelconque des revendications 1 à 7.
